# EUROPEAN PATENT APPLICATION

(11) **EP 4 693 832 A1**
(43) Date of publication of application: **11.02.2026**
(21) Application number: 24791721.4
(22) Date of filing: 08.02.2024
(51) Int. Cl.: H02K 1/32, H02K 1/276, H02K 9/19, H02K 21/02

(54) **SILICON STEEL SHEET HAVING RADIAL FLOW CHANNEL, PERMANENT MAGNET SYNCHRONOUS MOTOR, POWERTRAIN AND ELECTRIC VEHICLE**

(30) Priority: 20.04.2023 CN 202310451239
(71) Applicant: Huawei Digital Power Technologies Co., Ltd., Shenzhen, Guangdong 518043 (CN)
(72) Inventor: YANG, Shaobo, Shenzhen, Guangdong 518043 (CN); LIU, Yang, Shenzhen, Guangdong 518043 (CN)
(74) Representative: Gill Jennings & Every LLP
(86) International application number: PCT/CN2024/077045
(87) International publication number: WO 2024/217133

(57) **Abstract**

This application provides a silicon steel sheet (301) with a radial flow channel, a permanent magnet synchronous motor (100) with a radial flow channel, a powertrain (1), and an electric vehicle. The silicon steel sheet (301) with the radial flow channel (3014) includes a shaft hole (3011), a plurality of lightening holes (3013), a plurality of permanent magnet mounting holes (3012, 3015), and at least one radial flow channel (3014). The shaft hole (3011), the plurality of lightening holes (3013), and the plurality of permanent magnet mounting holes (3012, 3015) separately pass through the silicon steel sheet (301) in an axial direction of the silicon steel sheet (301). The plurality of permanent magnet mounting holes (3012, 3015) are spaced apart around the shaft hole (3011) in a circumferential direction of the silicon steel sheet (301), and the plurality of lightening holes (3013) are spaced apart around the shaft hole (3011) in the circumferential direction of the silicon steel sheet (301). The at least one radial flow channel (3014) is provided to make the permanent magnet mounting hole (3012, 3015) and the shaft hole (3011), the permanent magnet mounting hole (3012, 3015) and the lightening hole (3013), or the lightening hole (3013) and the shaft hole (3011) be in communication.

## Description

This application claims priority to Chinese Patent Application No. 202310451239.X, filed with the China National Intellectual Property Administration on April 20, 2023 and entitled "SILICON STEEL SHEET WITH RADIAL FLOW CHANNEL, PERMANENT MAGNET SYNCHRONOUS MOTOR WITH RADIAL FLOW CHANNEL, POWERTRAIN, AND ELECTRIC VEHICLE", which is incorporated herein by reference in its entirety.

### TECHNICAL FIELD

This application relates to the field of motor technologies, and in particular, to a silicon steel sheet with a radial flow channel, a permanent magnet synchronous motor with a radial flow channel, a powertrain, and an electric vehicle.

### BACKGROUND

A rotor of a permanent magnet synchronous motor in a powertrain of an electric vehicle includes a permanent magnet and a rotor core. The permanent magnet is fastened to a permanent magnet mounting slot of the rotor core. The permanent magnet generates heat when the permanent magnet synchronous motor is in operation. In an existing permanent magnet synchronous motor, cooling liquid is usually transferred through a lightening hole of a rotor core to dissipate heat from the rotor core and a permanent magnet.

However, the lightening hole and a permanent magnet mounting slot are spaced apart in the rotor core. In this case, the cooling liquid in the lightening hole cannot exchange heat directly with the permanent magnet in the permanent magnet mounting slot. Therefore, poor heat dissipation in the permanent magnet leads to an elevated temperature of the permanent magnet, necessitating the use of a costly and high-temperature-resistant permanent magnet and an increase in a volume of the rotor core, which consequently raise a production cost and an overall size of the permanent magnet synchronous motor. In addition, an excessively high temperature of the permanent magnet may cause demagnetization, affecting power performance and a service life of the permanent magnet synchronous motor. This is not conducive to promotion of the electric vehicle industry.

### SUMMARY

Embodiments of this application provide a silicon steel sheet with a radial flow channel, a permanent magnet synchronous motor with a radial flow channel, a powertrain, and an electric vehicle. The radial flow channel of the silicon steel sheet can improve heat dissipation performance of the permanent magnet synchronous motor, thereby improving power performance and extending a service life of the permanent magnet synchronous motor and the powertrain. This is conducive to promotion of the electric vehicle industry.

According to a first aspect, this application provides a silicon steel sheet with a radial flow channel. The silicon steel sheet includes a shaft hole, a plurality of lightening holes, a plurality of permanent magnet mounting holes, and at least one radial flow channel. The shaft hole, the plurality of lightening holes, and the plurality of permanent magnet mounting holes separately pass through the silicon steel sheet in an axial direction of the silicon steel sheet. The plurality of permanent magnet mounting holes are spaced apart around the shaft hole in a circumferential direction of the silicon steel sheet, and the plurality of lightening holes are spaced apart around the shaft hole in the circumferential direction of the silicon steel sheet. The at least one radial flow channel includes at least one of a first radial flow channel, a second radial flow channel, or a third radial flow channel. The first radial flow channel is provided to make the shaft hole and at least one of the permanent magnet mounting holes be in communication. The second radial flow channel is provided to make at least one of the permanent magnet mounting holes and at least one of the lightening holes be in communication. The third radial flow channel is provided to make the shaft hole and at least one of the lightening holes be in communication.

The silicon steel sheet with the radial flow channel provided in embodiments of this application is used in a permanent magnet synchronous motor, allowing cooling liquid to flow through the at least one radial flow channel into the permanent magnet mounting hole to cool a permanent magnet, enhancing cooling efficiency, thereby effectively improving heat dissipation performance of the permanent magnet synchronous motor, and further improving power performance and extending a service life of the permanent magnet synchronous motor.

In an implementation, in a radial direction of the silicon steel sheet, a distance between the plurality of lightening holes and the shaft hole is less than a distance between the plurality of permanent magnet mounting holes and the shaft hole. In the circumferential direction of the silicon steel sheet, a width of the third radial flow channel is greater than a width of the first radial flow channel or the second radial flow channel, and the width of the third radial flow channel is less than or equal to a width of the lightening hole.

In the silicon steel sheet with the radial flow channel provided in embodiments of this application, flow resistance of the second radial flow channel is less than flow resistance of the first radial flow channel. When a rotational speed of a rotor is low and a generated centrifugal force is small, cooling liquid preferentially flows into the lightening hole along the second radial flow channel, and when a rotational speed of the rotor is low and a heat generation amount is small, cooling liquid flowing into the permanent magnet mounting hole along the first radial flow channel is reduced, thereby reducing power consumption of the permanent magnet synchronous motor and improving power performance of the permanent magnet synchronous motor.

In an implementation, in the axial direction of the silicon steel sheet, a projection of the first radial flow channel, a projection of the second radial flow channel, and a projection of the third radial flow channel do not overlap. Correspondingly, in the silicon steel sheet with the radial flow channel provided in embodiments of this application, cooling liquid can directly exchange heat with a plurality of parts of the silicon steel sheet through a plurality of radial flow channels, thereby reducing a possibility that a high-temperature point occurs in the silicon steel sheet of the permanent magnet synchronous motor, improving heat dissipation performance of the permanent magnet synchronous motor, and improving power performance and extending a service life of the permanent magnet synchronous motor.

In an implementation, in the silicon steel sheet provided in this application, the first radial flow channel, the second radial flow channel, or the third radial flow channel includes one or more communicating holes. The communicating hole passes through the silicon steel sheet in the axial direction of the silicon steel sheet. The communicating hole of the first radial flow channel makes the shaft hole and at least one of the permanent magnet mounting holes be in communication. The communicating hole of the second radial flow channel makes at least one of the permanent magnet mounting holes and at least one of the lightening holes be in communication. The communicating hole of the third radial flow channel makes the shaft hole and at least one of the lightening holes be in communication.

In the silicon steel sheet with the radial flow channel provided in embodiments of this application, the communicating hole passing through the silicon steel sheet in the axial direction of the silicon steel sheet forms the radial flow channel. This can not only reduce a weight of the silicon steel sheet, thereby improving power performance of the permanent magnet synchronous motor, but also reduce difficulty in manufacturing the radial flow channel, thereby reducing a production cost of the permanent magnet synchronous motor.

In an implementation, in the silicon steel sheet provided in this application, the plurality of permanent magnet mounting holes are classified into a plurality of groups, each group of permanent magnet mounting holes includes two permanent magnet mounting holes, the two permanent magnet mounting holes in each group of permanent magnet mounting holes are symmetrically arranged in the radial direction of the silicon steel sheet, and two permanent magnet mounting holes in at least one group of permanent magnet mounting holes are in communication with the shaft hole through a same first radial flow channel.

In the silicon steel sheet with the radial flow channel provided in embodiments of this application, the same first radial flow channel makes the shaft hole and two permanent magnet mounting holes in a group of permanent magnet mounting holes be in communication. This can not only simplify a manufacturing process of the silicon steel sheet, thereby enhancing processing efficiency of the silicon steel sheet, but also balance liquid inlet amounts of the two permanent magnet mounting holes in the group of permanent magnet mounting holes, and balance heat dissipation performance of a plurality of permanent magnets in the group of permanent magnet mounting holes, thereby reducing a possibility that a high-temperature point occurs in the permanent magnet of the permanent magnet synchronous motor, improving heat dissipation performance of the permanent magnet synchronous motor, and improving power performance and extending a service life of the permanent magnet synchronous motor.

In an implementation, in the silicon steel sheet provided in this application, the permanent magnet mounting hole includes a first hole wall and a second hole wall, the first hole wall and the second hole wall are opposite to each other, a distance between the first hole wall and the shaft hole is less than a distance between the second hole wall and the shaft hole in the radial direction of the silicon steel sheet, and the first radial flow channel or the second radial flow channel passes through the first hole wall in the radial direction of the silicon steel sheet.

In the silicon steel sheet with the radial flow channel provided in embodiments of this application, the permanent magnet mounting hole is in communication with the shaft hole or the lightening hole by the first hole wall. Under the action of a centrifugal force of rotation of the rotor, cooling liquid can flow from the first hole wall to the second hole wall along a surface of the permanent magnet. The cooling liquid can directly exchange heat with a plurality of parts of the permanent magnet, improving temperature uniformity of the permanent magnet in the permanent magnet mounting hole, thereby reducing a possibility that a high-temperature point occurs in the permanent magnet of the permanent magnet synchronous motor, improving heat dissipation performance of the permanent magnet synchronous motor, and improving power performance and extending a service life of the permanent magnet synchronous motor.

According to a second aspect, this application provides a permanent magnet synchronous motor with a radial flow channel. The permanent magnet synchronous motor includes the silicon steel sheet with the radial flow channel according to the first aspect and any one of the implementations thereof. The permanent magnet synchronous motor includes a motor shaft, a rotor, and a stator, the rotor is sleeved on the motor shaft, the stator is sleeved on the rotor, the rotor includes a plurality of permanent magnets and a plurality of silicon steel sheets, and the plurality of silicon steel sheets are adjacently arranged in an axial direction of the motor shaft. Each of the silicon steel sheets includes a shaft hole, a plurality of lightening holes, and a plurality of permanent magnet mounting holes, the shaft hole, the plurality of lightening holes, and the plurality of permanent magnet mounting holes separately pass through the silicon steel sheet in the axial direction of the silicon steel sheet, the plurality of permanent magnet mounting holes are spaced apart around the shaft hole in a circumferential direction of the silicon steel sheet, and the plurality of lightening holes are spaced apart around the shaft hole in the circumferential direction of the silicon steel sheet. The permanent magnet mounting hole is provided to accommodate at least one permanent magnet, and the shaft hole is provided to accommodate the motor shaft. At least one silicon steel sheet includes at least one of a first radial flow channel, a second radial flow channel, or a third radial flow channel. The first radial flow channel is provided to make the shaft hole and at least one of the permanent magnet mounting holes be in communication, the second radial flow channel is provided to make the shaft hole and at least one of the lightening holes be in communication, and the third radial flow channel is provided to make at least one of the lightening holes and at least one of the permanent magnet mounting holes be in communication.

In the permanent magnet synchronous motor with the radial flow channel provided in this application, at least one silicon steel sheet includes the radial flow channel, allowing cooling liquid to flow through at least one of the first radial flow channel, the second radial flow channel, or the third radial flow channel into the permanent magnet mounting hole to cool the permanent magnet, enhancing cooling efficiency, thereby improving heat dissipation performance of the permanent magnet synchronous motor, and further improving power performance and extending a service life of the permanent magnet synchronous motor.

In an implementation, in the permanent magnet synchronous motor with the radial flow channel provided in this application, the rotor includes a plurality of rotor cores, the plurality of rotor cores are in the axial direction of the motor shaft, the plurality of silicon steel sheets are classified into a plurality of groups, each group of silicon steel sheets forms one of the rotor cores in the axial direction of the motor shaft, and each group of silicon steel sheets includes at least one silicon steel sheet with the radial flow channel.

In the permanent magnet synchronous motor with the radial flow channel provided in this application, each rotor core includes at least one silicon steel sheet with the radial flow channel, so that cooling liquid can flow into the permanent magnet mounting hole or the lightening hole along the radial flow channel, and the cooling liquid can directly exchange heat with the permanent magnet and the silicon steel sheet of each rotor core, thereby improving heat dissipation performance of the permanent magnet synchronous motor, and further improving power performance and extending a service life of the permanent magnet synchronous motor.

In an implementation, the permanent magnet synchronous motor with the radial flow channel provided in this application includes an end plate. The plurality of silicon steel sheets are arranged on a side of the end plate in the axial direction of the motor shaft, and an end surface that is of the end plate and that faces the plurality of silicon steel sheets includes at least one liquid outlet hole. In the axial direction of the motor shaft, a projection of the at least one liquid outlet hole at least partially overlaps a projection of one of the permanent magnet mounting holes or a projection of one of the lightening holes in the silicon steel sheet adjacent to the end plate.

In the permanent magnet synchronous motor with the radial flow channel provided in this application, the liquid outlet hole of the end plate matches the permanent magnet mounting hole or the lightening hole of the silicon steel sheet in the rotor. After cooling liquid flowing into the permanent magnet mounting hole or the lightening hole along the first radial flow channel, the second radial flow channel, or the third radial flow channel directly exchanges heat with the permanent magnet and the silicon steel sheet, the cooling liquid obtained after heat exchange can directly flow out through a plurality of liquid outlet holes of the end plate, thereby improving heat dissipation performance of the permanent magnet synchronous motor, and further improving power performance and extending a service life of the permanent magnet synchronous motor.

In an implementation, in the permanent magnet synchronous motor with the radial flow channel provided in this application, the plurality of liquid outlet holes of the end plate include at least one of a first liquid outlet hole or a second liquid outlet hole. In the axial direction of the motor shaft, a projection of the first liquid outlet hole at least partially overlaps the projection of one of the permanent magnet mounting holes in the silicon steel sheet adjacent to the end plate. In the axial direction of the motor shaft, a projection of the second liquid outlet hole at least partially overlaps the projection of one of the lightening holes in the silicon steel sheet adjacent to the end plate. In a radial direction of the motor shaft, a distance between the second liquid outlet hole and the motor shaft is less than a distance between the first liquid outlet hole and the motor shaft.

In the permanent magnet synchronous motor with the radial flow channel provided in this application, due to a centrifugal force of rotation of the rotor, cooling liquid obtained after heat exchange in the permanent magnet mounting hole can directly flow out through the first liquid outlet hole nearby, or cooling liquid obtained after heat exchange in the lightening hole can directly flow out through the second liquid outlet hole nearby, thereby improving heat dissipation performance of the permanent magnet synchronous motor, and further improving power performance and extending a service life of the permanent magnet synchronous motor.

In an implementation, in the permanent magnet synchronous motor with the radial flow channel provided in this application, the end plate is sleeved on the motor shaft, the end plate includes a radial liquid inlet channel, an inlet of the radial liquid inlet channel is provided on an inner circumferential surface that is of the end plate and that faces the motor shaft, and an outlet of the radial liquid inlet channel is provided on the end surface that is of the end plate and that faces the plurality of silicon steel sheets. In the axial direction of the motor shaft, a projection of the outlet of the radial liquid inlet channel at least partially overlaps the projection of one of the lightening holes or the projection of one of the permanent magnet mounting holes in the silicon steel sheet adjacent to the end plate.

In the permanent magnet synchronous motor with the radial flow channel provided in this application, the radial liquid inlet channel of the end plate matches the permanent magnet mounting hole or the lightening hole of the silicon steel sheet, so that a structure of the permanent magnet synchronous motor can be simplified, and cooling liquid can flow into the permanent magnet mounting hole or the lightening hole nearby to directly exchange heat with the silicon steel sheet and the permanent magnet, thereby improving heat dissipation performance of the permanent magnet synchronous motor, and further improving power performance and extending a service life of the permanent magnet synchronous motor.

In an implementation, in the permanent magnet synchronous motor with the radial flow channel provided in this application, the motor shaft includes an intra-shaft cooling liquid channel and one or more radial through holes, the radial through hole is in communication with the intra-shaft cooling liquid channel, and the radial through hole is provided on an outer circumferential surface of the motor shaft. In the radial direction of the motor shaft, a projection of at least one of the radial through holes at least partially overlaps a projection of the first radial flow channel or the second radial flow channel in the at least one silicon steel sheet.

In the permanent magnet synchronous motor with the radial flow channel provided in this application, the motor shaft matches the permanent magnet mounting hole or the lightening hole of the silicon steel sheet. Cooling liquid can flow into the permanent magnet mounting hole or the lightening hole along the radial flow channel of the silicon steel sheet through the intra-shaft cooling liquid channel and the radial through hole of the motor shaft. During operation of the permanent magnet synchronous motor, a silicon steel sheet in a middle part of the rotor is higher than other silicon steel sheets, and a temperature of a middle part of the permanent magnet is higher than those of other parts of the permanent magnet, so that high-temperature points of the rotor are formed in the middle part of the rotor and in the middle part of the permanent magnet. Correspondingly, in the permanent magnet synchronous motor provided in this application, cooling liquid can directly flow into the lightening hole and the permanent magnet mounting hole of the silicon steel sheet in the middle part of the rotor through the motor shaft, improving heat dissipation effect on the high-temperature points of the rotor, thereby reducing a possibility that a high-temperature point occurs in the rotor of the permanent magnet synchronous motor, improving heat dissipation performance of the permanent magnet synchronous motor, and improving power performance and extending a service life of the permanent magnet synchronous motor.

In an implementation, in the permanent magnet synchronous motor with the radial flow channel provided in this application, the motor shaft includes an intra-shaft cooling liquid channel and one or more radial through holes, the radial through hole is in communication with the intra-shaft flow channel, and the radial through hole is provided on an outer circumferential surface of the motor shaft. In the radial direction of the motor shaft, a projection of at least one of the radial through holes at least partially overlaps a projection of the inlet of the radial liquid inlet channel.

In the permanent magnet synchronous motor with the radial flow channel provided in this application, the motor shaft matches the end plate, and cooling liquid can flow into the permanent magnet mounting hole or the lightening hole along the radial liquid inlet channel of the end plate through the intra-shaft cooling liquid channel and the radial through hole of the motor shaft, so that a structure of the permanent magnet synchronous motor can be simplified, and cooling liquid can flow into the permanent magnet mounting hole or the lightening hole nearby to directly exchange heat with the silicon steel sheet and the permanent magnet, thereby improving heat dissipation performance of the permanent magnet synchronous motor, and further improving power performance and extending a service life of the permanent magnet synchronous motor.

According to a third aspect, this application further provides a powertrain. The powertrain includes the permanent magnet synchronous motor according to the second aspect and any one of the implementations thereof. The powertrain includes a reducer or gearbox and the permanent magnet synchronous motor according to the second aspect and any one of the implementations thereof. The motor shaft of the permanent magnet synchronous motor is in a transmission connection with an input shaft of the reducer or an input shaft of the gearbox. The powertrain provided in this application includes the permanent magnet synchronous motor according to the second aspect and any one of the implementations thereof, so that heat dissipation performance and power performance of the powertrain can be improved.

According to a fourth aspect, this application further provides an electric vehicle. In this application, the electric vehicle includes wheels, a transmission mechanism, and the powertrain according to the third aspect and any one of the implementations thereof. The powertrain drives the wheels by using the transmission mechanism. The electric vehicle provided in this application includes the powertrain according to the third aspect and any one of the implementations thereof, so that heat dissipation performance and power performance of the electric vehicle can be improved.

### BRIEF DESCRIPTION OF DRAWINGS

FIG. 1 is a diagram of an electric vehicle according to an embodiment of this application;
FIG. 2 is a diagram of a powertrain according to an embodiment of this application;
FIG. 3 is a diagram of a permanent magnet synchronous motor according to an embodiment of this application;
FIG. 4 is a diagram of a rotor in a permanent magnet synchronous motor according to an embodiment of this application;
FIG. 5 is a diagram of permanent magnets in a permanent magnet synchronous motor according to an embodiment of this application;
FIG. 6 is a diagram of an end plate in a permanent magnet synchronous motor according to an embodiment of this application;
FIG. 7 is a diagram of flowing of cooling liquid in a permanent magnet synchronous motor according to an embodiment of this application;
FIG. 8 is another diagram of flowing of cooling liquid in a permanent magnet synchronous motor according to an embodiment of this application;
FIG. 9 is another diagram of flowing of cooling liquid in a permanent magnet synchronous motor according to an embodiment of this application;
FIG. 10a is another diagram of flowing of cooling liquid in a permanent magnet synchronous motor according to an embodiment of this application;
FIG. 10b is another diagram of flowing of cooling liquid in a permanent magnet synchronous motor according to an embodiment of this application;
FIG. 11 is a diagram of a silicon steel sheet with a radial flow channel according to an embodiment of this application;
FIG. 12 is another diagram of a silicon steel sheet with a radial flow channel according to an embodiment of this application;
FIG. 13 is a diagram of a part of a permanent magnet synchronous motor according to an embodiment of this application;
FIG. 14 is another diagram of a silicon steel sheet with a radial flow channel according to an embodiment of this application;
FIG. 15 is another diagram of a silicon steel sheet with a radial flow channel according to an embodiment of this application;
FIG. 16 is another diagram of an end plate in a permanent magnet synchronous motor according to an embodiment of this application;
FIG. 17 is another diagram of flowing of cooling liquid in a permanent magnet synchronous motor according to an embodiment of this application;
FIG. 18 is another diagram of flowing of cooling liquid in a permanent magnet synchronous motor according to an embodiment of this application; and
FIG. 19 is another diagram of flowing of cooling liquid in a permanent magnet synchronous motor according to an embodiment of this application.

### DESCRIPTION OF EMBODIMENTS

Terms used in the following embodiments are merely intended to describe specific embodiments, but are not intended to limit this application. As used in this specification and the appended claims of this application, singular expression forms "one", "a", and "this" are also intended to include expression forms such as "one or more", unless otherwise specified in the context clearly.

Reference to "an embodiment" or "a specific embodiment" or the like described in this specification means that one or more embodiments of this application include a specific feature, structure, or characteristic described with reference to this embodiment. Terms "include", "comprise", "have", and variants thereof all mean "including but not limited to", unless otherwise specified particularly.

It should be noted that the "communication" mentioned in embodiments of this application means that a cooling medium such as cooling liquid or cooling oil can flow between two structures. The "communication" mentioned in embodiments of this application may indicate direct communication, or may indicate communication by another structure. For example, that A is in communication with B includes that A is directly in communication with B. Alternatively, that A is in communication with B includes that A is in communication with B by C. The "connection" mentioned in embodiments of this application means that two structures are directly connected or are connected by a pipeline, with no other structure. In addition, the "flow channel" and "channel" mentioned in embodiments of this application are channels for a cooling medium such as cooling liquid or cooling oil to flow.

A rotor of a permanent magnet synchronous motor in a powertrain of an electric vehicle includes a permanent magnet and a rotor core. The permanent magnet is fastened to a permanent magnet mounting slot of the rotor core. The permanent magnet generates heat when the permanent magnet synchronous motor is in operation. In an existing permanent magnet synchronous motor, cooling liquid is usually transferred through a lightening hole of a rotor core to dissipate heat from the rotor core and a permanent magnet.

However, the lightening hole and a permanent magnet mounting slot are spaced apart in the rotor core. In this case, the cooling liquid in the lightening hole cannot exchange heat directly with the permanent magnet in the permanent magnet mounting slot. Therefore, the permanent magnet has poor heat dissipation effect, leading to a high temperature of the permanent magnet. In this case, a high-cost and high-temperature-resistant permanent magnet needs to be used, and a volume of the rotor core needs to be increased, consequently increasing a production cost and an overall size of the permanent magnet synchronous motor. In addition, an excessively high temperature of the permanent magnet may cause demagnetization of the permanent magnet, affecting power performance and extending a service life of the permanent magnet synchronous motor. This is not conducive to promotion of the electric vehicle industry.

In view of this, embodiments of this application provide a silicon steel sheet with a radial flow channel, a permanent magnet synchronous motor with a radial flow channel, a powertrain, and an electric vehicle. In the silicon steel sheet, a shaft hole and a permanent magnet mounting hole, a shaft hole and a lightening hole, or a permanent magnet mounting hole and a lightening hole are in communication to form the radial flow channel, so that cooling liquid can directly exchange heat with a permanent magnet. This can not only reduce a production cost and an overall size of the permanent magnet synchronous motor, but also improve heat dissipation performance of the permanent magnet synchronous motor, thereby improving power performance and extending a service life of the permanent magnet synchronous motor and the powertrain. This is conducive to promotion of the electric vehicle industry.

To make the objectives, technical solutions, and advantages of this application clearer, the following further describes this application in detail with reference to the accompanying drawings.

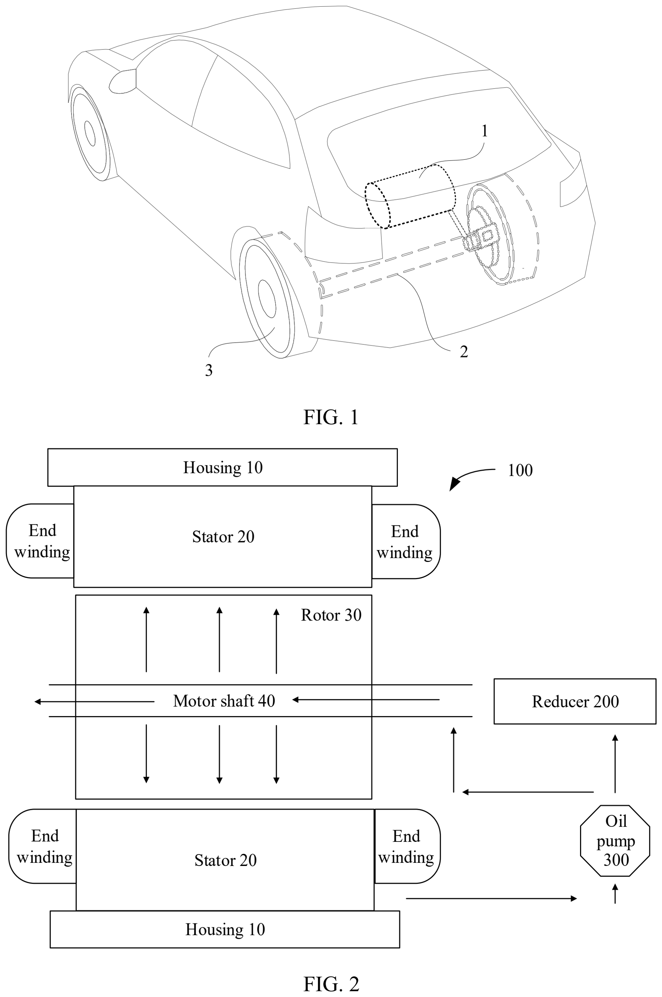

FIG. 1 is a diagram of an electric vehicle according to an embodiment of this application. Refer to FIG. 1. The electric vehicle provided in an embodiment of this application includes a powertrain 1, a transmission mechanism 2, and wheels 3. The powertrain 1 drives the wheels 3 by using the transmission mechanism 2. The powertrain 1 is configured to convert electric energy into mechanical energy. The transmission mechanism 2 is configured to make the powertrain 1 and the wheels 3 be in a transmission connection.

FIG. 2 is a diagram of a powertrain according to an embodiment of this application. As shown in FIG. 2, the powertrain 1 provided in an embodiment of this application includes a permanent magnet synchronous motor 100 and a reducer 200. The permanent magnet synchronous motor 100 and the reducer 200 are in a transmission connection. The permanent magnet synchronous motor 100 is configured to drive the transmission mechanism 2 of the electric vehicle by using the reducer 200.

In an embodiment, the powertrain 1 includes a permanent magnet synchronous motor 100, a reducer 200, and an oil pump 300. The oil pump 300 is configured to transfer cooling liquid to at least one of the permanent magnet synchronous motor 100 or the reducer 200. The cooling liquid flows through the permanent magnet synchronous motor 100 or the reducer 200 and takes heat away, thereby dissipating heat from the powertrain 1.

In an embodiment of this application, the cooling liquid may also be referred to as cooling oil. In an embodiment of this application, the reducer 200 may alternatively be a gearbox.

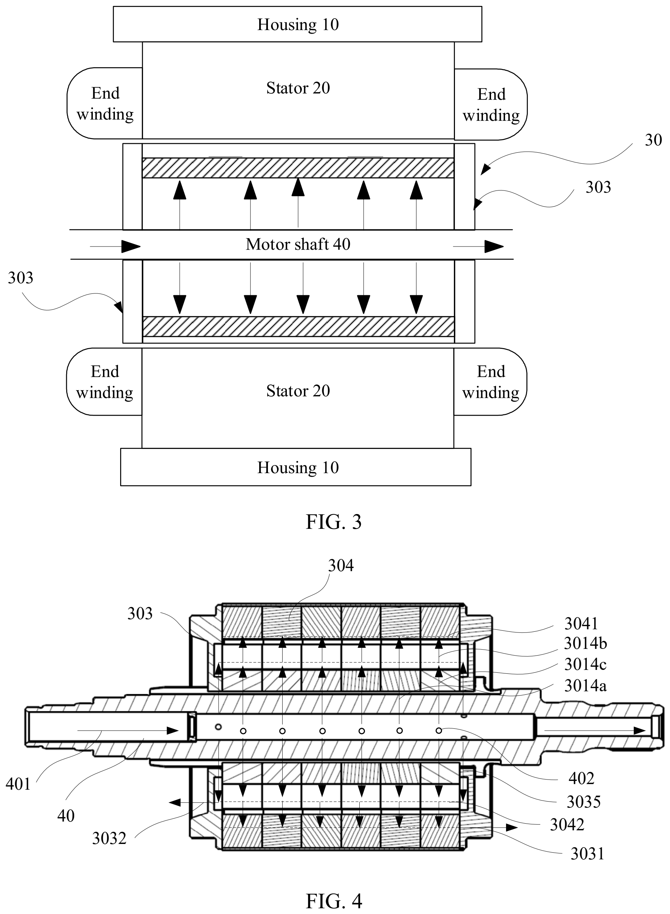

FIG. 3 is a diagram of a permanent magnet synchronous motor according to an embodiment of this application. Refer to FIG. 3. The permanent magnet synchronous motor 100 includes a stator 20, a rotor 30, and a motor shaft 40. The rotor 30 is sleeved on the motor shaft 40, and the stator 20 is sleeved on the rotor 30. The rotor 30 rotates relative to the stator 20 and drives the motor shaft 40 to rotate. The motor shaft 40 is configured to be in a transmission connection with the reducer 200. The motor shaft 40 of the permanent magnet synchronous motor 100 drives the transmission mechanism 2 of the electric vehicle by using the reducer 200. The rotor 30 of the permanent magnet synchronous motor 100 includes a plurality of permanent magnets (not shown in FIG. 3) and a plurality of silicon steel sheets (not shown in FIG. 3). The plurality of silicon steel sheets are adjacently arranged in an axial direction of the motor shaft 40.

In an embodiment, the permanent magnet synchronous motor 100 includes a housing 10, a stator 20, a rotor 30, and a motor shaft 40. The housing 10 is configured to accommodate the stator 20 and the rotor 30 of the permanent magnet synchronous motor 100.

In an embodiment, the permanent magnet synchronous motor 100 and the powertrain 1 share the housing 10. Correspondingly, the housing 10 is configured to accommodate the reducer 200, and the stator 20 and the rotor 30 of the permanent magnet synchronous motor 100.

In an embodiment of this application, the rotor 30 in the permanent magnet synchronous motor 100 includes an end plate 303 and a plurality of segments of rotor cores (not shown in FIG. 3). The plurality of segments of rotor cores are adjacently arranged in the axial direction of the motor shaft 40. The plurality of segments of rotor cores are arranged on a side of the end plate 303 in the axial direction of the motor shaft 40. The end plate 303 is sleeved on the motor shaft 40.

FIG. 4 is a diagram of a rotor in a permanent magnet synchronous motor according to an embodiment of this application. As shown in FIG. 4, the permanent magnet synchronous motor 100 includes two end plates 303 and six segments of rotor cores 304. The six segments of rotor cores 304 are adjacently arranged in the axial direction of the motor shaft 40. The six segments of rotor cores 304 are arranged between the two end plates 303 in the axial direction of the motor shaft 40. The end plate 303 is sleeved on the motor shaft 40.

In an embodiment, the rotor 30 of the permanent magnet synchronous motor 100 includes one rotor core 304 and two end plates 303. Correspondingly, the rotor core 304 is adjacently arranged between the two end plates 303 in the axial direction of the motor shaft 40.

In an embodiment, the rotor 30 of the permanent magnet synchronous motor 100 includes one end plate 303 and at least one rotor core 304. Correspondingly, the at least one rotor core 304 is arranged on a side of the end plate 303 in the axial direction of the motor shaft 40.

In an embodiment of this application, the rotor core 304 includes a motor shaft mounting hole, a plurality of permanent magnet mounting slots, and a plurality of lightening slots. The motor shaft mounting hole, the plurality of permanent magnet mounting slots, and the plurality of lightening slots separately pass through the rotor core 304 in the axial direction of the rotor core 304. The plurality of permanent magnet mounting slots are spaced apart around the motor shaft mounting hole in a circumferential direction of the rotor core 304, and the plurality of lightening slots are spaced apart around the motor shaft mounting hole in the circumferential direction of the rotor core 304.

In an embodiment of this application, motor shaft mounting holes of a plurality of rotor cores 304 are in communication to form a motor shaft mounting hole of the rotor 30. As shown in FIG. 4, the motor shaft mounting hole of the rotor core 304 or the motor shaft mounting hole of the rotor 30 is provided to be sleeved on the motor shaft 40 of the permanent magnet synchronous motor 100.

In an embodiment of this application, each permanent magnet mounting slot is provided to accommodate one or more permanent magnets 302. In an embodiment, each permanent magnet mounting slot is provided to accommodate one permanent magnet 302. In an embodiment, each permanent magnet mounting slot is provided to accommodate a plurality of permanent magnets 302, and the plurality of permanent magnets 302 are adjacently arranged in the permanent magnet mounting slot.

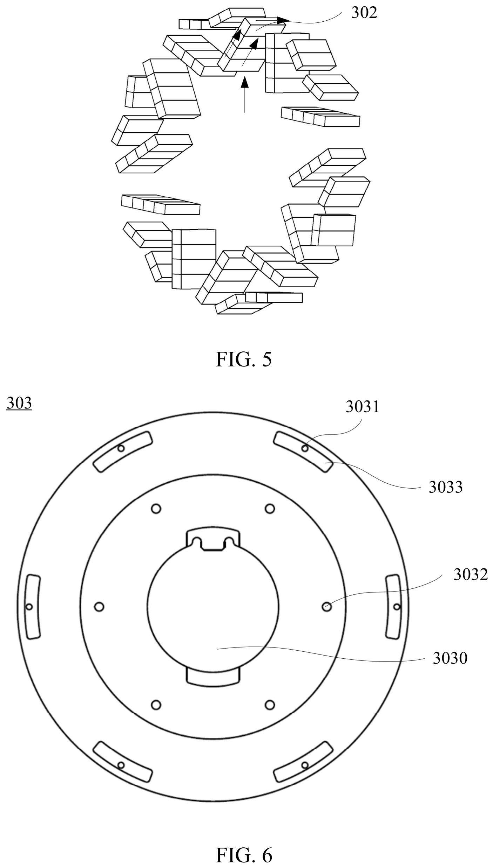

FIG. 5 is a diagram of permanent magnets in a permanent magnet synchronous motor according to an embodiment of this application. As shown in FIG. 5, each permanent magnet 302 is arranged in a permanent magnet mounting slot of the rotor core 304 in the axial direction of the motor shaft 40.

In an embodiment of this application, the rotor 30 includes at least one of a first axial cooling liquid channel 3041 or a second axial cooling liquid channel 3042.

As shown in FIG. 4, a plurality of permanent magnet mounting slots of two adjacent rotor cores 304 are respectively in communication to form the first axial cooling liquid channel 3041 of the rotor 30. A plurality of lightening slots of two adjacent rotor cores 304 are respectively in communication to form the second axial cooling liquid channel 3042 of the rotor 30.

In an embodiment, each rotor core 304 includes at least one of a first axial cooling liquid channel 3041 or a second axial cooling liquid channel 3042. First axial cooling liquid channels 3041 of two adjacent rotor cores 304 are in communication. Alternatively, second axial cooling liquid channels 3042 of two adjacent rotor cores 304 are in communication.

In an embodiment of this application, the rotor 30 includes at least one radial flow channel. In an embodiment, at least one rotor core 304 includes the at least one radial flow channel. The at least one radial flow channel includes at least one of a first radial flow channel 3014a, a second radial flow channel 3014b, or a third radial flow channel 3014c.

As shown in FIG. 4, the first radial flow channel 3014a is provided to make the first axial cooling liquid channel 3041 and the motor shaft mounting hole of the rotor 30 be in communication. In an embodiment, the first radial flow channel 3014a is provided to make the permanent magnet mounting slot and the motor shaft mounting hole of the rotor core 304 be in communication.

As shown in FIG. 4, the second radial flow channel 3014b is provided to make the first axial cooling liquid channel 3041 and the second axial cooling liquid channel 3042 of the rotor 30 be in communication. In an embodiment, the second radial flow channel 3014b is provided to make the permanent magnet mounting slot and the lightening slot of the rotor core 304 be in communication.

As shown in FIG. 4, the second radial flow channel 3014b is provided to make the motor shaft mounting hole and the second axial cooling liquid channel 3042 of the rotor 30 be in communication. In an embodiment, the second radial flow channel 3014b is provided to make the motor shaft mounting hole and the lightening slot of the rotor core 304 be in communication.

In the permanent magnet synchronous motor 100 provided in an embodiment of this application, the motor shaft 40 includes an intra-shaft cooling liquid channel 401 and one or more radial through holes 402. As shown in FIG. 4, in the motor shaft 40, the radial through holes 402 and the intra-shaft cooling liquid channel 401 are in communication, and the radial through holes 401 are provided on an outer circumferential surface of the motor shaft. In a radial direction of the motor shaft 40, a projection of at least one radial through hole 401 at least partially overlaps a projection of the first radial flow channel 3014a or the third radial flow channel 3014c in the rotor 30 or the rotor core 304.

In the permanent magnet synchronous motor 100 provided in this application, cooling liquid can flow into a permanent magnet mounting hole 3012 through the intra-shaft cooling liquid channel 401 and the radial through hole 402 of the motor shaft 40 along the first radial flow channel 3014a of the silicon steel sheet or along the second radial channel 3014b from a lightening hole 3013. Correspondingly, in the permanent magnet synchronous motor 100 provided in this application, cooling liquid can directly exchange heat with the permanent magnet 302, thereby improving heat dissipation performance of the permanent magnet synchronous motor 100, and further improving power performance and extending a service life of the permanent magnet synchronous motor 100.

In addition, in the permanent magnet synchronous motor 100 provided in this application, cooling liquid can flow into the lightening hole 3013 through the intra-shaft cooling liquid channel 401 and the radial through hole 402 of the motor shaft 40, and the third radial channel 3014c. Correspondingly, in the permanent magnet synchronous motor 100 provided in this application, cooling liquid can directly exchange heat with a plurality of parts of the rotor core 304, thereby improving heat dissipation performance of the permanent magnet synchronous motor 100, and further improving power performance and extending a service life of the permanent magnet synchronous motor 100.

In an embodiment of this application, an end surface that is of the end plate 303 of the permanent magnet synchronous motor 100 and that faces the rotor core 304 includes at least one liquid outlet hole. In an embodiment, the at least one liquid outlet hole passes through the end plate 303 in the axial direction of the end plate 303.

FIG. 6 is a diagram of an end plate in a permanent magnet synchronous motor according to an embodiment of this application. As shown in FIG. 4 and FIG. 6, the motor shaft 40 penetrates the end plate 303 through an end plate shaft hole 3030. The at least one liquid outlet hole of the end plate 303 in the permanent magnet synchronous motor 100 includes at least one of a first liquid outlet hole 3031 or a second liquid outlet hole 3032.

Under the action of a centrifugal force of rotation of the rotor 30, cooling liquid obtained after heat exchange in the first axial cooling liquid channel 3041 can flow out through the first liquid outlet hole 3031, or cooling liquid obtained after heat exchange in the second axial cooling liquid channel 3042 can flow out through the second liquid outlet hole 3032, thereby improving heat dissipation performance of the permanent magnet synchronous motor 100, and further improving power performance and extending a service life of the permanent magnet synchronous motor 100.

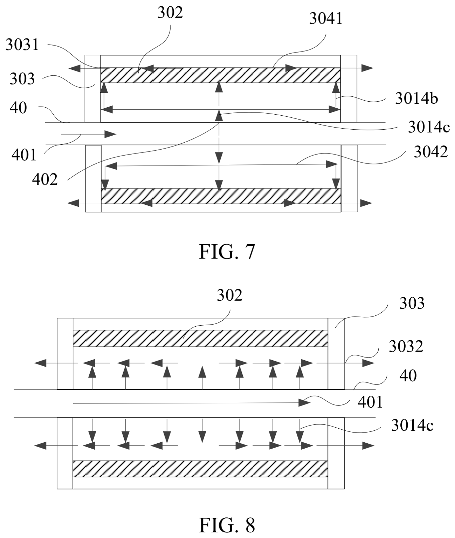

In an embodiment, in the permanent magnet synchronous motor 100 provided in this application, the rotor 30 includes a second radial flow channel 3014b and a third radial flow channel 3014c. FIG. 7 is a diagram of flowing of cooling liquid in a permanent magnet synchronous motor according to an embodiment of this application. As shown in FIG. 7, under the action of a centrifugal force of rotation of the rotor 30, the cooling liquid flows into the second axial cooling liquid channel 3042 along the third radial channel 3014c through the intra-shaft cooling liquid channel 401 and the radial through hole 402 of the motor shaft 40, and the cooling liquid in the second axial cooling liquid channel 3042 flows into the first axial cooling liquid channel 3041 through the second radial flow channel 3014b to directly exchange heat with the permanent magnet 302. The cooling liquid obtained after heat exchange flows out through the first liquid outlet hole 3031.

Correspondingly, in the permanent magnet synchronous motor 100 provided in this application, the cooling liquid can flow through a plurality of parts of the rotor 30, and the cooling liquid can also directly exchange heat with the permanent magnet 302, thereby improving heat dissipation performance of the permanent magnet synchronous motor 100, and further improving power performance and extending a service life of the permanent magnet synchronous motor 100.

In an embodiment, in the permanent magnet synchronous motor 100 provided in this application, the rotor 30 includes a third radial flow channel 3014c. FIG. 8 is another diagram of flowing of cooling liquid in a permanent magnet synchronous motor according to an embodiment of this application. As shown in FIG. 4 and FIG. 8, under the action of a centrifugal force of rotation of the rotor 30, the cooling liquid flows into the second axial cooling liquid channel 3042 along the third radial channel 3014c through the intra-shaft cooling liquid channel 401 and the radial through hole 402 of the motor shaft 40, and the cooling liquid in the second axial cooling liquid channel 3042 directly exchanges heat with the rotor core 301. The cooling liquid obtained after heat exchange flows out through the second liquid outlet hole 3032.

Correspondingly, in the permanent magnet synchronous motor 100 provided in this application, when a rotational speed of the rotor 30 is low and a heat generation amount of the permanent magnet 302 is small, the second liquid outlet hole 3032 of the end plate 303 matches the second axial cooling liquid channel 3042, so that cooling liquid entering the second axial cooling liquid channel 3042 can flow out through the second liquid outlet hole 3032, to perform pressure relief on cooling liquid in the rotor 30 and reduce a flow rate of cooling liquid entering the permanent magnet mounting hole 3012, helping reduce power consumption of the permanent magnet synchronous motor 100.

In an embodiment, in the permanent magnet synchronous motor 100 provided in an embodiment of this application, the end plate 303 includes a radial liquid inlet channel 3034. An inlet of the radial liquid inlet channel 3034 is provided on an inner circumferential surface that is of the end plate 303 and that faces the motor shaft 40, and an outlet of the radial liquid inlet channel 3034 is provided on an end surface that is of the end plate 303 and that faces the rotor core 304.

In an embodiment of this application, in the permanent magnet synchronous motor 100, the radial liquid inlet channel 3034 of the end plate 303 matches the radial through hole 402 of the motor shaft 40. As shown in FIG. 4, in the radial direction of the motor shaft 40, a projection of the inlet of the radial liquid inlet channel 3034 at least partially overlaps a projection of at least one radial through hole 402.

In an embodiment of this application, in the permanent magnet synchronous motor 100, the radial liquid inlet channel 3034 of the end plate 303 matches the first axial cooling liquid channel 3041 or the second axial cooling liquid channel 3042. In the axial direction of the motor shaft 40, a projection of the outlet of the radial liquid inlet channel 3034 of the end plate 303 at least partially overlaps a projection of the first axial cooling liquid channel 3041 or a projection of the second axial cooling liquid channel 3042 in the rotor core 304 adjacent to the end plate 303.

In an embodiment, in the axial direction of the motor shaft 40, a projection of the outlet of the radial liquid inlet channel 3034 of the end plate 303 at least partially overlaps a projection of the second axial cooling liquid channel 3042 in the rotor core 304 adjacent to the end plate 303. As shown in FIG. 4, in the axial direction of the motor shaft 40, a projection of the outlet of the radial liquid inlet channel 3034 of the end plate 303 at least partially overlaps a projection of the second axial cooling liquid channel 3042 in the rotor core 304 adjacent to the end plate 303.

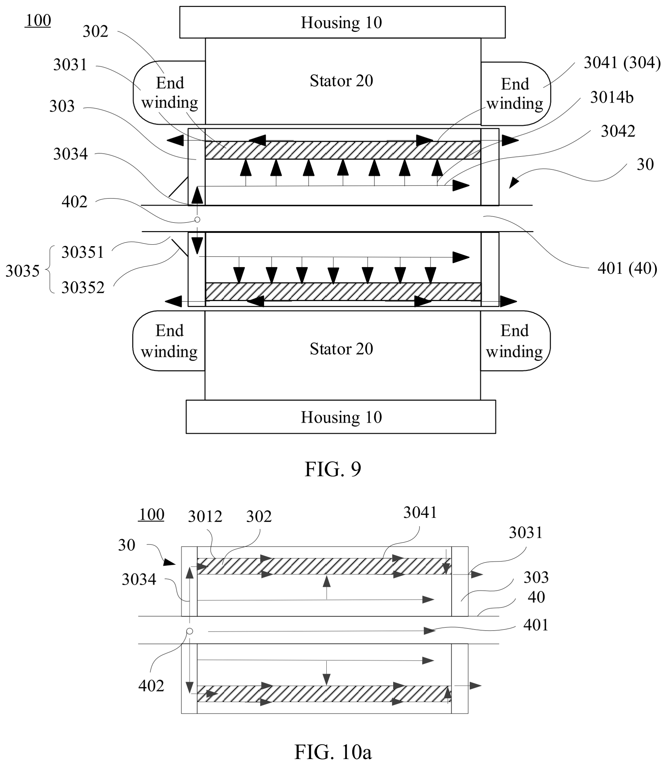

FIG. 9 is another diagram of flowing of cooling liquid in a permanent magnet synchronous motor according to an embodiment of this application. As shown in FIG. 9, the cooling liquid can flow into the second axial cooling liquid channel 3042 along the radial liquid inlet channel 3034 of the end plate 303 through the intra-shaft cooling liquid channel 401 and the radial through hole 402 of the motor shaft 40. The cooling liquid in the second axial cooling liquid channel 3042 flows into the first axial cooling liquid channel 3041 along the second radial flow channel 3014b. The cooling liquid in the first axial cooling liquid channel 3041 flows through the permanent magnet 302 to perform direct heat exchange. The cooling liquid obtained after heat exchange flows out through the first liquid outlet 3031.

In an embodiment, in the axial direction of the motor shaft 40, a projection of the outlet of the radial liquid inlet channel 3034 of the end plate 303 at least partially overlaps a projection of the first axial cooling liquid channel 3041 in the rotor core 304 adjacent to the end plate 303.

FIG. 10a is another diagram of flowing of cooling liquid in a permanent magnet synchronous motor according to an embodiment of this application. As shown in FIG. 10a, the rotor 30 in the permanent magnet synchronous motor 100 includes two end plates 303. The radial liquid inlet channel 3034 and the first liquid outlet 3031 are respectively provided on the two end plates 303. One end plate 303 includes the radial liquid inlet channel 3034, and the radial liquid inlet channel 3034 matches the permanent magnet mounting hole 3012. The other end plate 303 includes the first liquid outlet 3031.

As shown in FIG. 10a, in the axial direction of the motor shaft 40, a projection of the radial liquid inlet channel 3034 at least partially overlaps a projection of the first axial cooling liquid channel 3041. The cooling liquid can flow into the first axial cooling liquid channel 3041 along the radial liquid inlet channel 3034 of the end plate 303 through the intra-shaft cooling liquid channel 401 and the radial through hole 402 of the motor shaft 40. Then, the cooling liquid flows through the permanent magnet 302 along the first axial cooling liquid channel 3041 and then flows out through the first liquid outlet 3031. The permanent magnet 302 is always in a state of being immersed in the cooling liquid. This can help improve cooling efficiency of the permanent magnet 302.

In an embodiment, in the axial direction of the motor shaft 40, a projection of the outlet of the radial liquid inlet channel 3034 of the end plate 303 at least partially overlaps a projection of the second axial cooling liquid channel 3042.

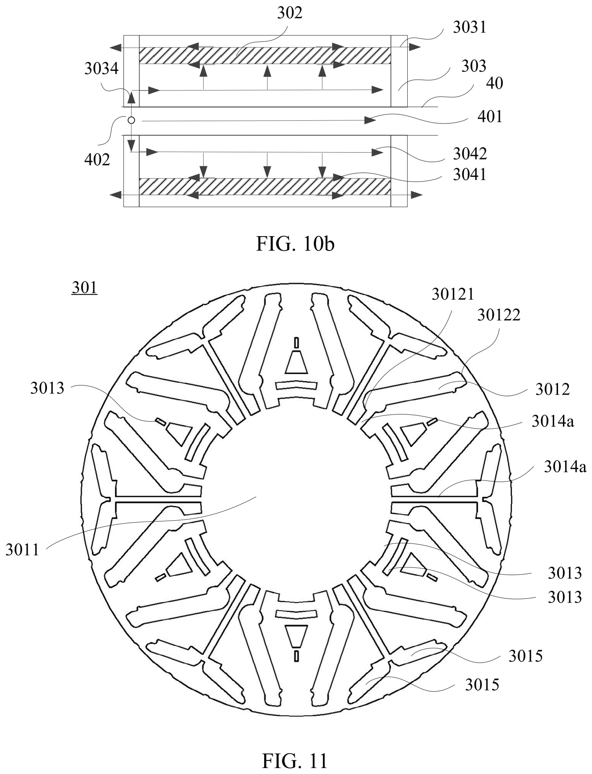

FIG. 10b is another diagram of flowing of cooling liquid in a permanent magnet synchronous motor according to an embodiment of this application. As shown in FIG. 10b, in the axial direction of the motor shaft 40, a projection of the radial liquid inlet channel 3034 at least partially overlaps a projection of the second axial cooling liquid channel 3042. The cooling liquid can flow into the second axial cooling liquid channel 3042 along the radial liquid inlet channel 3034 of the end plate 303 through the intra-shaft cooling liquid channel 401 and the radial through hole 402 of the motor shaft 40. The cooling liquid in the second axial cooling liquid channel 3041 flows into the first axial cooling liquid channel 3041 along the second radial flow channel 3014b. The cooling liquid flows through a surface of the permanent magnet 302 along the first axial cooling liquid channel 3041 to directly exchange heat with the permanent magnet 301. The permanent magnet 302 is always in a state of being immersed in the cooling liquid. This can help improve cooling efficiency of the permanent magnet 302. The cooling liquid obtained after heat exchange can flow out through the first liquid outlet 3031.

Correspondingly, in the permanent magnet synchronous motor 100 provided in embodiments of this application, the radial liquid inlet channel 3034 of the end plate 303 matches the first axial cooling liquid channel 3041 or the second axial cooling liquid channel 3042, so that a structure of the cooling liquid channel of the permanent magnet synchronous motor 100 can be simplified, and cooling liquid can directly flow into the first axial cooling liquid channel 3041 or the second axial cooling liquid channel 3042 to directly exchange heat with the rotor core 304 or the permanent magnet 302, thereby improving heat dissipation performance of the permanent magnet synchronous motor 100, and further improving power performance and extending a service life of the permanent magnet synchronous motor 100.

In an embodiment, in the permanent magnet synchronous motor 100 provided in an embodiment of this application, an end surface that is of the end plate 303 and that faces away from the rotor core 304 includes a liquid collecting cover 3035. As shown in FIG. 9, the liquid collecting cover 3035 includes a first opening portion 30351 and a second opening portion 30352. The first opening portion 30351 is fastened to the end surface that is of the end plate 303 and that faces away from the rotor core 304, and the first opening portion 30351 surrounds the radial liquid inlet 3034 of the end plate 303. An opening diameter of the second opening portion 30352 of the liquid collecting cover 3035 is greater than an opening diameter of the first opening portion 30351. In addition, in the permanent magnet synchronous motor 100 provided in an embodiment of this application, the housing 10 includes a nozzle, and the nozzle is configured to transfer cooling liquid to the interior of the permanent magnet synchronous motor 100. The nozzle is opposite to the second opening portion 30352. The cooling liquid is sprayed from the nozzle to the second opening portion 30352, and then flows into the radial liquid inlet 3034 of the end plate 303.

In an embodiment of this application, the rotor 30 in the permanent magnet synchronous motor 100 includes a plurality of silicon steel sheets. The plurality of silicon steel sheets 301 are adjacently arranged in the axial direction of the motor shaft 40. The plurality of silicon steel sheets 301 of the rotor 30 include at least one silicon steel sheet 301 with the radial flow channel.

FIG. 11 is a diagram of a silicon steel sheet in a permanent magnet synchronous motor according to an embodiment of this application. As shown in FIG. 11, each silicon steel sheet 301 includes a shaft hole 3011, a plurality of permanent magnet mounting holes 3012, and a plurality of lightening holes 3013. The shaft hole 3011 is provided to accommodate the motor shaft 40. The permanent magnet mounting hole 3012 is provided to accommodate at least one permanent magnet 302.

The shaft hole 3011, the plurality of permanent magnet mounting holes 3012, and the plurality of lightening holes 3013 separately pass through the silicon steel sheet 301 in an axial direction of the silicon steel sheet 301. The plurality of permanent magnet mounting holes 3012 are spaced apart around the shaft hole 3011 in a circumferential direction of the silicon steel sheet 301, and the plurality of lightening holes 3013 are spaced apart around the shaft hole 3011 in the circumferential direction of the silicon steel sheet 301.

In an embodiment of this application, the shaft hole 3011 of the silicon steel sheet 301 is provided to accommodate the motor shaft 40. As shown in FIG. 4, the plurality of silicon steel sheets 301 are adjacently arranged in the axial direction of the motor shaft 40 to form the rotor 30. In two adjacent silicon steel sheets 301, a shaft hole 3011 in one silicon steel sheet 301 and a shaft hole 3011 in the other silicon steel sheet 301 are in communication. Shaft holes 3011 of the plurality of adjacently arranged silicon steel sheets 301 are in communication to form the motor shaft mounting hole of the rotor 30. Correspondingly, the motor shaft 40 penetrates the plurality of shaft holes 3011 that are in communication, and the plurality of shaft holes 3011 that are in communication are provided to fasten the motor shaft 40.

In an embodiment of this application, the permanent magnet mounting hole 3012 of the silicon steel sheet 301 is provided to accommodate at least one or more permanent magnets 302. As shown in FIG. 4, in two adjacent silicon steel sheets 301, a plurality of permanent magnet mounting holes 3012 in one silicon steel sheet 301 and a plurality of permanent magnet mounting holes 3012 in the other silicon steel sheet 301 are in one-to-one communication. Correspondingly, permanent magnet mounting holes of the plurality of adjacently arranged silicon steel sheets 301 are in communication to form the permanent magnet mounting slot or the first axial cooling liquid channel 3041 of the rotor 30. Each permanent magnet mounting slot is provided to accommodate at least one permanent magnet 302. Similarly, lightening holes of the plurality of adjacently arranged silicon steel sheets 301 are in communication to form the lightening slot or the second axial cooling liquid channel 3042 of the rotor 30.

In an embodiment, the rotor 30 in the permanent magnet synchronous motor 100 includes a plurality of rotor cores 304. The plurality of rotor cores 304 are adjacently arranged in the axial direction of the motor shaft 40. Correspondingly, the plurality of silicon steel sheets 301 in the rotor 30 are classified into a plurality of groups. Each group of silicon steel sheets 301 forms a rotor core 304 in the axial direction of the motor shaft 40. A group of silicon steel sheets 301 corresponding to each rotor core 304 includes at least one silicon steel sheet 301 with the radial flow channel. Correspondingly, each group of silicon steel sheets 301 includes at least one silicon steel sheet 301 with the radial flow channel.

In two adjacent silicon steel sheets 301 in the rotor core 304, a shaft hole 3011 in one silicon steel sheet 301 and a shaft hole 3011 in the other silicon steel sheet 301 are in communication. Correspondingly, shaft holes 3011 of a plurality of adjacently arranged silicon steel sheets 301 in each group of silicon steel sheets 301 are in communication to form the motor shaft mounting hole of the rotor core 304. Motor shaft mounting holes of a plurality of adjacently arranged rotor cores 304 are in communication to form the motor shaft mounting hole of the rotor 30.

In two adjacent silicon steel sheets 301 in the rotor core 304, a plurality of permanent magnet mounting holes 3012 in one silicon steel sheet 301 and a plurality of permanent magnet mounting holes 3012 in the other silicon steel sheet 301 are in one-to-one communication. Correspondingly, permanent magnet mounting holes of a plurality of adjacently arranged silicon steel sheets 301 in each group of silicon steel sheets 301 are in communication to form the permanent magnet mounting slot of the rotor 30. Each permanent magnet mounting slot is provided to accommodate at least one permanent magnet 302. Permanent magnet mounting slots of a plurality of adjacently arranged rotor cores 304 are in communication to form the first axial cooling liquid channel 3041 of the rotor 30.

Similarly, lightening slots of a plurality of adjacently arranged rotor cores 304 are in communication to form the second axial cooling liquid channel 3042 of the rotor 30.

In an embodiment, a group of silicon steel sheets 301 corresponding to each rotor core 304 includes at least one silicon steel sheet 301 with the radial flow channel. The at least one silicon steel sheet 301 with the radial flow channel is arranged in a middle part of the rotor core 304. As shown in FIG. 4, by using the silicon steel sheet 301 with the radial flow channel, cooling liquid can first dissipate heat from a middle part of the permanent magnet 302 or the silicon steel sheet 301 in the rotor core 304, eliminating high-temperature points of the permanent magnet 302 and the silicon steel sheet 301.

In addition, a length of the permanent magnet 302 in each segment of rotor core 301 is less than a length of the rotor core 301. In the axial direction of the motor shaft 40, there is a gap between two adjacent segments of rotor cores 301 and a gap between permanent magnets 302 of two adjacent segments of rotor cores 301.

Correspondingly, the silicon steel sheet 301 with the radial flow channel is arranged in the middle part of the rotor core 301, and can be misaligned with the gaps, preventing cooling liquid flowing along the radial flow channel 104 from flowing into the gaps, thereby improving heat dissipation performance and power performance of the permanent magnet synchronous motor 100.

In an embodiment of this application, at least one radial flow channel 3014 of the silicon steel sheet 301 with the radial flow channel includes at least one of a first radial flow channel 3014a or a second radial flow channel 3014b. In an embodiment, the at least one radial flow channel 3014 includes at least one of a first radial flow channel 3014a, a second radial flow channel 3014b, or a third radial flow channel 3014c.

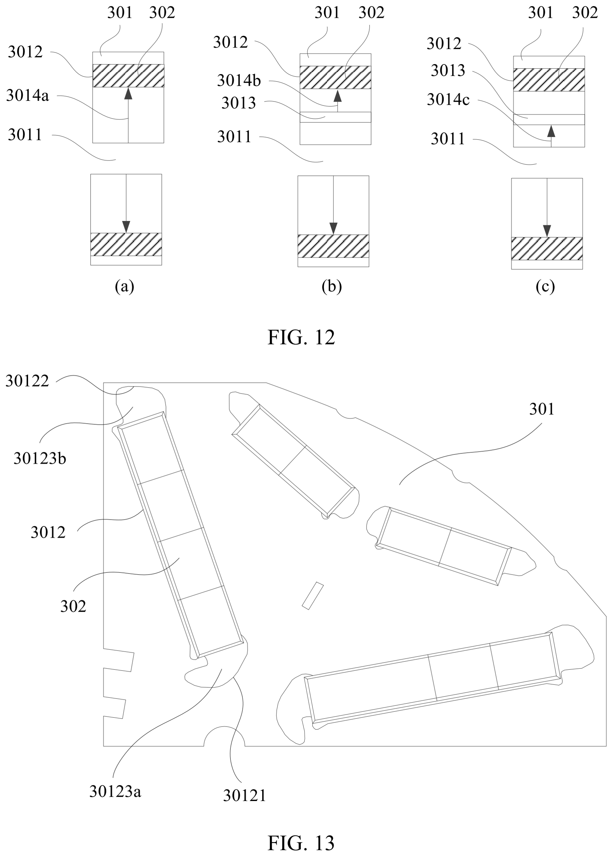

FIG. 12 is another diagram of a silicon steel sheet with a radial flow channel according to an embodiment of this application, where (a) in FIG. 12 describes the first radial flow channel 3014a, (b) in FIG. 12 describes the second radial flow channel 3014b, and (c) in FIG. 12 describes the third radial flow channel 3014c.

As shown in (a) in FIG. 12, the first radial flow channel 3014a is provided to make the shaft hole 3011 and at least one of the permanent magnet mounting holes 3012 be in communication. The first radial flow channel 3014a makes a permanent magnet mounting hole 3012 and a shaft hole 3011 be in communication in the radial direction of the silicon steel sheet 301. Specifically, the first radial flow channel 3014a passes through and connects a hole wall of the permanent magnet mounting hole 3012 and a hole wall of the shaft hole 3011 in the radial direction of the silicon steel sheet 301. Correspondingly, the first radial flow channel 3014a makes the shaft hole 301 and the first axial cooling liquid channel 3041 of the rotor 30 be in communication.

As shown in (b) in FIG. 12, the second radial flow channel 3014b is provided to make at least one of the permanent magnet mounting holes 3012 and at least one of the lightening holes 3013 be in communication. The second radial flow channel 3014b makes a permanent magnet mounting hole 3012 and a lightening hole 3013 be in communication in the radial direction of the silicon steel sheet 301. Specifically, the second radial flow channel 3014b passes through and connects a hole wall of the permanent magnet mounting hole 3012 and a hole wall of the lightening hole 3013 in the radial direction of the silicon steel sheet 301. Correspondingly, the second radial flow channel 3014b makes the first axial cooling liquid channel 3041 and the second axial cooling liquid channel 3042 of the rotor 30 be in communication.

As shown in (c) in FIG. 12, the third radial flow channel 3014c is provided to make the shaft hole 3011 and at least one of the lightening holes 3013 be in communication. The third radial flow channel 3014c makes a shaft hole 3011 and a lightening hole 3013 be in communication in the radial direction of the silicon steel sheet 301. Specifically, the third radial flow channel 3014c passes through and connects a hole wall of the shaft hole 3011 and a hole wall of the lightening hole 3013 in the radial direction of the silicon steel sheet 301. Correspondingly, the third radial flow channel 3014c makes the shaft hole 301 and the first axial cooling liquid channel 3041 of the rotor 30 be in communication.

During operation of the permanent magnet synchronous motor 100, a silicon steel sheet 301 in a middle part of the rotor 30 is higher than other silicon steel sheets 301, and a temperature of a middle part of the permanent magnet 302 is higher than those of other parts of the permanent magnet 302, so that high-temperature points are formed in the middle part of the rotor 30 and in the middle part of the permanent magnet 302. Correspondingly, the silicon steel sheet with the radial flow channel provided in this application is used in the permanent magnet synchronous motor 100, so that cooling liquid can flow through the middle part of the rotor 30 and the middle part of the permanent magnet 302 along at least one radial flow channel, thereby reducing a possibility that a high-temperature point occurs in the rotor 30 of the permanent magnet synchronous motor 100, improving heat dissipation balance of the permanent magnet synchronous motor 100, and improving power performance and extending a service life of the permanent magnet synchronous motor 100.

In an embodiment of this application, the permanent magnet mounting hole 3012 of the silicon steel sheet 301 includes a first hole wall 30121 and a second hole wall 30122, and the first hole wall 30121 and the second hole wall 30122 are opposite to each other. A distance between the first hole wall 30121 and the shaft hole 3011 is less than a distance between the second hole wall 30122 and the shaft hole 3011 in the radial direction of the silicon steel sheet 301. The first radial flow channel 3014a or the second radial flow channel 3014b passes through the first hole wall 30121 in the radial direction of the silicon steel sheet 301.

As shown in FIG. 13, the permanent magnet mounting hole 3012 includes a first hole wall 30121 and a second hole wall 30122. The first hole wall 30121 and the second hole wall 30122 are opposite to each other. A distance between the first hole wall 30121 and an axis of the shaft hole 3011 is less than a distance between the second hole wall 30122 and the axis of the shaft hole 3011 in the radial direction of the silicon steel sheet 301. As shown in FIG. 4, the first radial flow channel 3014a passes through the first hole wall 30121 in the radial direction of the silicon steel sheet 301. As shown in FIG. 11 and FIG. 12, the second radial flow channel 3014b passes through the first hole wall 30121 in the radial direction of the silicon steel sheet 301.

In the silicon steel sheet 301 provided in embodiments of this application, the permanent magnet mounting hole 3012 is in communication with the shaft hole 3011 or the lightening hole 3012 through the first hole wall 30121. The silicon steel sheet 301 provided in embodiments of this application is used in the rotor 30. Under the action of a centrifugal force of rotation of the rotor 30, cooling liquid can flow from the first hole wall 30121 to the second hole wall 30122 along a surface of the permanent magnet 302. The cooling liquid can directly exchange heat with a plurality of parts of the permanent magnet 302, improving cooling effect and temperature uniformity of the permanent magnet 302, thereby reducing a possibility that a high-temperature point occurs in the permanent magnet 302 of the permanent magnet synchronous motor 100, and improving heat dissipation performance, power performance, and a service life of the permanent magnet synchronous motor 100.

In the permanent magnet synchronous motor 100 provided in an embodiment of this application, a width of the permanent magnet mounting hole 3012 of the silicon steel sheet 301 is greater than a width of the permanent magnet accommodated by the permanent magnet mounting hole 3012. As shown in FIG. 13, a distance between the first hole wall 30121 and the second hole wall 30122 is greater than a length of the accommodated permanent magnet from the first hole wall 30121 to the second hole wall 30122. Correspondingly, there is a gap 30123a between the permanent magnet 302 and the first hole wall 30121 of the permanent magnet mounting hole 3012. Alternatively, there is a gap 30123b between the permanent magnet 302 and the second hole wall 30122 of the permanent magnet mounting hole 3012. Alternatively, there is a gap between the permanent magnet 302 and the first hole wall 30121 of the permanent magnet mounting hole 3012 and a gap between the permanent magnet 302 and the second hole wall 30122 of the permanent magnet mounting hole 3012. In addition, it may be understood that, to facilitate mounting of the permanent magnet 302 in the permanent magnet mounting hole 3012, there may also be a gap between the permanent magnet 302 and another hole wall for connecting the first hole wall 30121 and the second hole wall 30122.

In an embodiment of this application, a plurality of gaps 30123a of a plurality of adjacent silicon steel sheets are in communication to form a first gap channel of the rotor 30, and a plurality of gaps 30123b of the plurality of adjacent silicon steel sheets are in communication to form a second gap channel of the rotor 30. The first gap channel and the second gap channel together form the first axial cooling liquid channel 3041.

In the permanent magnet synchronous motor 100 provided in embodiments of this application, there is a gap between the permanent magnet mounting hole 3012 of the silicon steel sheet 301 and the permanent magnet 302. This can not only improve convenience of mounting the permanent magnet 302 in the permanent magnet mounting hole 3012, but also facilitate flowing of cooling liquid through a surface of the permanent magnet 302, so that the cooling liquid takes away heat generated by the permanent magnet, thereby dissipating heat from the permanent magnet.

As shown in FIG. 5 and FIG. 13, when cooling liquid flows into the permanent magnet mounting hole 3012 from the shaft hole 3011 of the silicon steel sheet 301 along the first radial flow channel 3014a or from the lightening hole 3013 along the third radial flow channel 3014c, the cooling liquid first flows through the gap 30123a and then flows to the gap 30123b along the surface of the permanent magnet 302. Correspondingly, the cooling liquid can flow through two ends and the surface of the permanent magnet 302, increasing a contact area between the permanent magnet 302 and the cooling liquid, thereby improving cooling effect of the permanent magnet 302.

In an embodiment of this application, the first radial flow channel 3014a, the second radial flow channel 3014b, or the third radial flow channel 3014c includes one or more communicating holes. The communicating hole passes through the silicon steel sheet 301 in the axial direction of the silicon steel sheet 301.

In an embodiment, the communicating hole of the first radial flow channel 3014a makes the shaft hole 3011 and at least one of the permanent magnet mounting holes 3012 be in communication. As shown in FIG. 11, the communicating hole of the first radial flow channel 3014a passes through the silicon steel sheet 301 in the axial direction of the silicon steel sheet 301, and makes at least one permanent magnet mounting hole 3012 and the shaft hole 3011 be in communication.

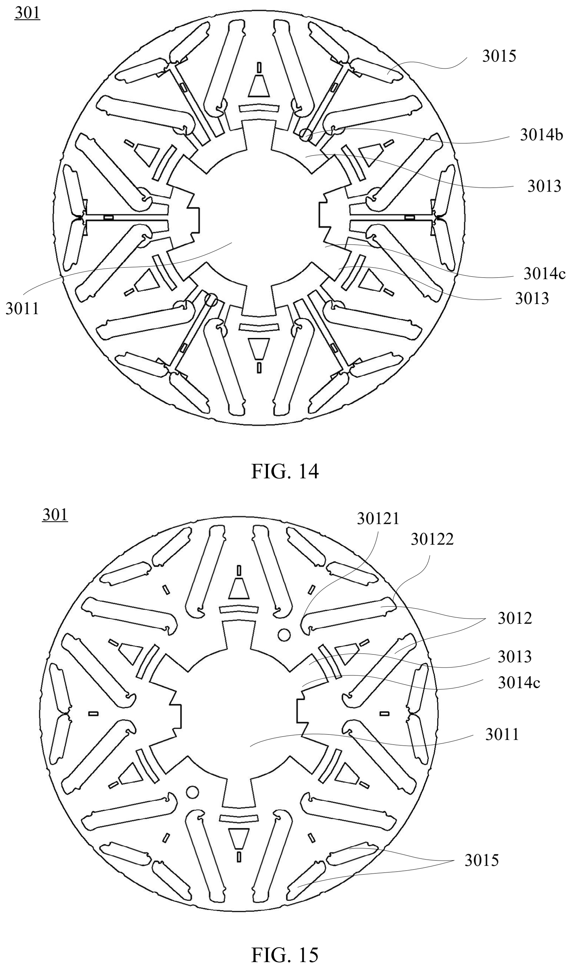

In an embodiment, the communicating hole of the second radial flow channel 3014b makes at least one of the permanent magnet mounting holes 3012 and at least one of the lightening holes 3013 be in communication. As shown in FIG. 14, the communicating hole of the second radial flow channel 3014c passes through the silicon steel sheet 301 in the axial direction of the silicon steel sheet 301, and makes at least one permanent magnet mounting hole 3012 and at least one lightening hole 3013 be in communication.

In an embodiment, the communicating hole of the third radial flow channel 3014c makes the shaft hole 3011 and at least one of the lightening holes 3013 be in communication. As shown in FIG. 15, the communicating hole of the third radial flow channel 3014c passes through the silicon steel sheet 301 in the axial direction of the silicon steel sheet 301, and makes at least one lightening hole 3013 and the shaft hole 3011 be in communication.

Correspondingly, in the silicon steel sheet 301 provided in embodiments of this application, the communicating hole passing through the silicon steel sheet 301 in the axial direction of the silicon steel sheet 301 forms at least one radial flow channel 3014. This can not only reduce a weight of the silicon steel sheet 301, thereby improving power performance of the permanent magnet synchronous motor 100, but also reduce difficulty in manufacturing the radial flow channel 3014, thereby reducing a production cost of the permanent magnet synchronous motor 100.

In an embodiment, in the silicon steel sheet 301 with the radial flow channel provided in an embodiment of this application, in a radial direction of the silicon steel sheet 301, in the silicon steel sheet 301, a distance between the plurality of lightening holes 3013 and the shaft hole 3011 is less than a distance between the plurality of permanent magnet mounting holes 3012 and the shaft hole 3011. In the circumferential direction of the silicon steel sheet 301, a width of the third radial flow channel 3014c is greater than a width of the first radial flow channel 3014a or the second radial flow channel 3014b, and the width of the third radial flow channel 3014c is less than or equal to a width of the lightening hole 3013.

As shown in FIG. 11, FIG. 14, and FIG. 15, in the silicon steel sheet 301, a width of the lightening hole 3013, a width of the third radial flow channel 3014c, and a width of the first radial flow channel 3014a or the second radial flow channel 3014b decrease sequentially, so that flow resistance of the third radial flow channel 3014b is less than flow resistance of the first radial flow channel 3014a. Under the action of a centrifugal force of rotation of the rotor 30, cooling liquid preferentially flows into the lightening hole 3013 along the third radial flow channel 3014c. In addition, when a centrifugal force of rotation of the rotor 30 is small, cooling liquid flowing into the permanent magnet mounting hole 3012 along the first radial flow channel 3014a or the first radial flow channel 3014b can be reduced, thereby reducing power consumption of the permanent magnet synchronous motor 100, and further improving power performance of the permanent magnet synchronous motor 100.

In an embodiment, in the silicon steel sheet 301 with the radial flow channel provided in an embodiment of this application, in the axial direction of the silicon steel sheet 301, a projection of the first radial flow channel 3014a, a projection of the second radial flow channel 3014b, and a projection of the third radial flow channel 3014c do not overlap.

As shown in FIG. 11, FIG. 14, and FIG. 15, the first radial flow channel 3014a, the second radial flow channel 3014b, and the third radial flow channel 3014c are spaced apart and distributed on the silicon steel sheet 301. Cooling liquid can flow through a plurality of parts of the silicon steel sheet 301 through the first radial flow channel 3014a, the second radial flow channel 3014b, or the third radial flow channel 3014c, so that the cooling liquid can directly exchange heat with the plurality of parts of the silicon steel sheet 301, thereby reducing a possibility that a high-temperature point occurs in the silicon steel sheet of the permanent magnet synchronous motor 100, and improving heat dissipation performance, power performance, and a service life of the permanent magnet synchronous motor 100.

In an embodiment, in the silicon steel sheet 301 with the radial flow channel provided in an embodiment of this application, in the axial direction of the silicon steel sheet 301, a projection of the shaft hole 3011, projections of the plurality of lightening holes 3013, and projections of the plurality of permanent magnet mounting holes 3012 do not overlap.

As shown in FIG. 11, FIG. 14, and FIG. 15, in the silicon steel sheet 301, the plurality of lightening holes 3013 are spaced apart, the plurality of permanent magnet mounting holes 3012 are spaced apart, and the permanent magnet mounting hole 3012 and the lightening hole 3013 are spaced apart. The permanent magnet mounting hole 3012 and the shaft hole 3011 are in communication through the first radial flow channel 3014a. The permanent magnet mounting hole 3012 and the lightening hole 3013 are in communication through the second radial flow channel 3014b. The lightening hole 3013 and the shaft hole 3011 are in communication through the third radial flow channel 3014c.

Correspondingly, cooling liquid can directly exchange heat with a plurality of parts of the silicon steel sheet 301 through a plurality of radial flow channels 3014, thereby reducing a possibility that a high-temperature point occurs in the silicon steel sheet 301 of the permanent magnet synchronous motor 100, improving heat dissipation performance of the permanent magnet synchronous motor 100, and improving power performance and extending a service life of the permanent magnet synchronous motor.

In an embodiment, in the silicon steel sheet 301 with the radial flow channel provided in an embodiment of this application, the plurality of permanent magnet mounting holes 3012 are classified into a plurality of groups, each group of permanent magnet mounting holes 3012 includes two permanent magnet mounting holes 3012, the two permanent magnet mounting holes 3012 in each group of permanent magnet mounting holes 3012 are symmetrically arranged in the radial direction of the silicon steel sheet 301, and two permanent magnet mounting holes 3012 in at least one group of permanent magnet mounting holes 3012 are in communication with the shaft hole 3011 through a same first radial flow channel 3014a or are in communication with a same lightening hole 3013 through a same second radial flow channel 3014b.

As shown in FIG. 11, the silicon steel sheet 301 includes a plurality of groups of permanent magnet mounting holes 3012. The plurality of groups of permanent magnet mounting holes 3012 are spaced apart around the shaft hole 3011 in the circumferential direction of the silicon steel sheet 301. Each group of permanent magnet mounting holes 3012 includes two permanent magnet mounting holes 3012.

In an embodiment, in the silicon steel sheet 301 with the radial flow channel provided in an embodiment of this application, the two permanent magnet mounting holes in each group of permanent magnet mounting holes are in a same shape. As shown in FIG. 4, two permanent magnet mounting holes 3012 in each group of permanent magnet mounting holes 3012 are symmetrically arranged in the radial direction of the silicon steel sheet 301.

In an embodiment, in the silicon steel sheet 301 with the radial flow channel provided in an embodiment of this application, each group of permanent magnet mounting holes in the plurality of groups of permanent magnet mounting holes is in a different shape. As shown in FIG. 4, the silicon steel sheet 301 includes two groups of permanent magnet mounting holes: permanent magnet mounting holes 3012 and permanent magnet mounting holes 3015. One group of permanent magnet mounting holes 3015 with a smaller length is arranged between two groups of permanent magnet mounting holes 3012 with a larger length.

As shown in FIG. 11, two permanent magnet mounting holes 3015 of a group of permanent magnet mounting holes 3015 are together in communication with the shaft hole 3011 through another first radial flow channel 3014a.

As shown in FIG. 14, two permanent magnet mounting holes 3015 of a group of permanent magnet mounting holes 3015 are together in communication with a same lightening hole 3013 through a second radial flow channel 3014b.

In the silicon steel sheet 301 with the radial flow channel provided in this application, the same first radial flow channel 3014a makes the shaft hole 3011 and two permanent magnet mounting holes 3012 in a group of permanent magnet mounting holes 3012 be in communication. This can not only simplify a manufacturing process of the silicon steel sheet 301, thereby improving processing efficiency of the silicon steel sheet 301, but also balance liquid inlet amounts of the two permanent magnet mounting holes 3012 in the group of permanent magnet mounting holes 3012, and balance heat dissipation performance of a plurality of permanent magnets 302 in the group of permanent magnet mounting holes 3012, thereby reducing a possibility that a high-temperature point occurs in the permanent magnet 302 of the permanent magnet synchronous motor 100, and improving heat dissipation performance, power performance, and a service life of the permanent magnet synchronous motor 100.

In the permanent magnet synchronous motor 100 provided in this application, a plurality of silicon steel sheets 301 are arranged on a side of the end plate 303 of the rotor 30 in the axial direction of the motor shaft 40, and an end surface that is of the end plate 303 and that faces the plurality of silicon steel sheets 301 includes at least one liquid outlet hole.

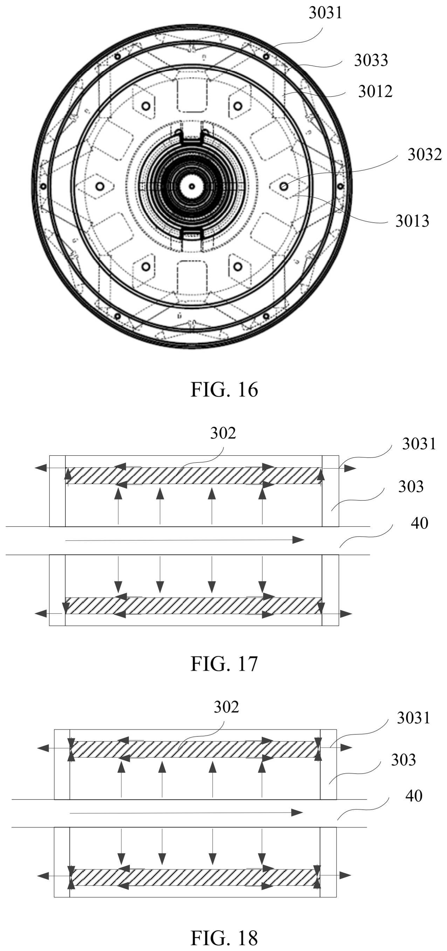

FIG. 16 is another diagram of an end plate in a permanent magnet synchronous motor according to an embodiment of this application. As shown in FIG. 16, in the axial direction of the motor shaft 40, a projection of the at least one liquid outlet hole at least partially overlaps a projection of one of the permanent magnet mounting holes 3012 or a projection of one of the lightening holes 3013 in the silicon steel sheet 301 adjacent to the end plate 303.

Correspondingly, due to a centrifugal force of rotation of the rotor 30, cooling liquid obtained after heat exchange in the permanent magnet mounting hole 3012 can directly flow out through the first liquid outlet hole 3031 nearby, or cooling liquid obtained after heat exchange in the lightening hole 3013 can directly flow out through the second liquid outlet hole 3032 nearby, thereby improving heat dissipation performance of the permanent magnet synchronous motor 100, and further improving power performance and extending a service life of the permanent magnet synchronous motor 100.

In an embodiment of this application, the at least one liquid outlet hole of the end plate 303 in the permanent magnet synchronous motor 100 includes at least one of a first liquid outlet hole 3031 or a second liquid outlet hole 3032. As shown in FIG. 16, in a radial direction of the motor shaft 40, a distance between the second liquid outlet hole 3032 and the motor shaft 40 is less than a distance between the first liquid outlet hole 3031 and the motor shaft 40.

As shown in FIG. 16, in the axial direction of the motor shaft 40, a projection of the first liquid outlet hole 3031 at least partially overlaps the projection of one of the permanent magnet mounting holes 3012 in the silicon steel sheet 301 adjacent to the end plate 303.

As shown in FIG. 16, in the axial direction of the motor shaft 40, a projection of the second liquid outlet hole 3032 at least partially overlaps the projection of one of the lightening holes 3013 in the silicon steel sheet 301 adjacent to the end plate 303.

In an embodiment, in the axial direction of the motor shaft 40, a projection of the gap 30123b in the permanent magnet mounting hole 3012 at least partially overlaps a projection of the first liquid outlet hole 3031. Correspondingly, in the axial direction of the motor shaft 40, a projection of the first liquid outlet hole 3031 at least partially overlaps a projection of the second gap channel.

FIG. 17 is another diagram of flowing of cooling liquid in a permanent magnet synchronous motor according to an embodiment of this application. As shown in FIG. 17, under the action of a centrifugal force of rotation of the rotor 30, cooling liquid in the gap 30123b of the permanent magnet mounting hole 3012 flows through the surface of the permanent magnet 302 along the second gap channel and then flows out through the first liquid outlet hole 3031, so that the permanent magnet 302 can be immersed in the cooling liquid, thereby enhancing cooling efficiency of the permanent magnet 302.

In an embodiment, in the axial direction of the motor shaft 40, a projection of the permanent magnet 302 in the permanent magnet mounting hole 3012 at least partially overlaps a projection of the first liquid outlet 3031. Correspondingly, in the axial direction of the motor shaft 40, a projection of the first liquid outlet hole 3031 does not overlap a projection of the first gap channel and a projection of the second gap channel.

FIG. 18 is another diagram of flowing of cooling liquid in a permanent magnet synchronous motor according to an embodiment of this application. As shown in FIG. 18, under the action of a centrifugal force of rotation of the rotor 30, cooling liquid flows through the surface of the permanent magnet 302 along a first gap and a second gap, and then flows out through the first liquid outlet 3031, so that the permanent magnet 302 can be immersed in the cooling liquid, thereby enhancing cooling efficiency of the permanent magnet 302.

In an embodiment, in the axial direction of the motor shaft 40, a projection of the gap 30123a in the permanent magnet mounting hole 3012 at least partially overlaps a projection of the first liquid outlet 3031. Correspondingly, in the axial direction of the motor shaft 40, a projection of the first liquid outlet hole 3031 at least partially overlaps a projection of the first gap channel.

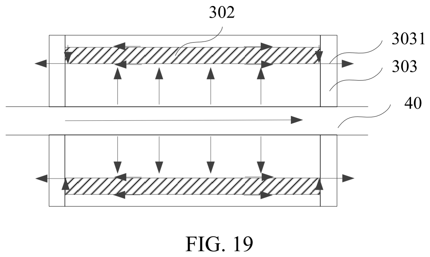

FIG. 19 is another diagram of flowing of cooling liquid in a permanent magnet synchronous motor according to an embodiment of this application. As shown in FIG. 19, under the action of a centrifugal force of rotation of the rotor 30, cooling liquid flows through the surface of the permanent magnet 302 along a first gap, and then flows out through the first liquid outlet 3031, so that the permanent magnet 302 can be immersed in the cooling liquid, thereby enhancing cooling efficiency of the permanent magnet 302.

As shown in FIG. 16, a side that is of the end plate 303 and that faces a plurality of silicon steel sheets 301 includes a liquid collecting groove 3033. Specifically, in the axial direction of the motor shaft 40, a projection of the permanent magnet mounting hole 3012 at least partially overlaps a projection of the liquid collecting groove 3034 of the end plate 303, and a projection of the first liquid outlet 3031 overlaps the projection of the liquid collecting groove 3033. Correspondingly, the liquid collecting groove 3033 matches the first liquid outlet 3031. Cooling liquid flowing out of the permanent magnet mounting hole 3012 is collected by the liquid collecting groove 3034 and then flows out through the first liquid outlet 3031.

As shown in FIG. 4 and FIG. 16, the end plate 303 is sleeved on the motor shaft 40, the end plate 303 includes a radial liquid inlet channel 3033, an inlet of the radial liquid inlet channel 3033 is provided on an inner circumferential surface that is of the end plate 303 and that faces the motor shaft 40, and an outlet of the radial liquid inlet channel 3033 is provided on the end surface that is of the end plate 303 and that faces the plurality of silicon steel sheets 301. In the axial direction of the motor shaft 40, a projection of the outlet of the radial liquid inlet channel 3033 of the end plate 303 at least partially overlaps the projection of one of the lightening holes 3013 or the projection of one of the permanent magnet mounting holes 3012 in the silicon steel sheet 301 adjacent to the end plate 303.

Correspondingly, cooling liquid can flow into the permanent magnet mounting hole 3012 or the lightening hole 3013 through the radial liquid inlet channel 3033 of the end plate 303, so that a structure of the cooling liquid channel in the permanent magnet synchronous motor 100 can be simplified, and cooling liquid can flow into the permanent magnet mounting hole 3012 or the lightening hole 3013 nearby to directly exchange heat with the silicon steel sheet 301 and the permanent magnet 302, thereby improving heat dissipation performance of the permanent magnet synchronous motor 100, and further improving power performance and extending a service life of the permanent magnet synchronous motor.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A silicon steel sheet with a radial flow channel, wherein the silicon steel sheet comprises a shaft hole, a plurality of lightening holes, a plurality of permanent magnet mounting holes, and at least one radial flow channel, the shaft hole, the plurality of lightening holes, and the plurality of permanent magnet mounting holes separately pass through in an axial direction of the silicon steel sheet, spaced apart around the shaft hole in a circumferential direction of the silicon steel sheet, and the at least one radial flow channel comprises at least one of a first radial flow channel, a second radial flow channel, or a third radial flow channel, wherein
the first radial flow channel is provided to make the shaft hole and at least one of the permanent magnet mounting holes be in communication;
the second radial flow channel is provided to make at least one of the permanent magnet mounting holes and at least one of the lightening holes be in communication; and
the third radial flow channel is provided to make the shaft hole and at least one of the lightening holes be in communication.

2. The silicon steel sheet according to claim 1, wherein in a radial direction of the silicon steel sheet, a distance between the plurality of lightening holes and the shaft hole is less than a distance between the plurality of permanent magnet mounting holes and the shaft hole; and
in the circumferential direction of the silicon steel sheet, a width of the third radial flow channel is greater than a width of the first radial flow channel or the second radial flow channel, and the width of the third radial flow channel is less than or equal to a width of the lightening hole.

3. The silicon steel sheet according to claim 1 or 2, wherein in the axial direction of the silicon steel sheet, a projection of the first radial flow channel, a projection of the second radial flow channel, and a projection of the third radial flow channel do not overlap.

4. The silicon steel sheet according to any one of claims 1 to 3, wherein the first radial flow channel, the second radial flow channel, or the third radial flow channel comprises one or more communicating holes, and the communicating hole passes through the silicon steel sheet in the axial direction of the silicon steel sheet, wherein
the communicating hole of the first radial flow channel makes the shaft hole and at least one of the permanent magnet mounting holes be in communication;
the communicating hole of the second radial flow channel makes at least one of the permanent magnet mounting holes and at least one of the lightening holes be in communication; and
the communicating hole of the third radial flow channel makes the shaft hole and at least one of the lightening holes be in communication.

5. The silicon steel sheet according to any one of claims 1 to 4, wherein in the axial direction of the silicon steel sheet, a projection of the shaft hole, projections of the plurality of lightening holes, and projections of the plurality of permanent magnet mounting holes do not overlap.

6. The silicon steel sheet according to any one of claims 1 to 5, wherein the plurality of permanent magnet mounting holes are classified into a plurality of groups, each group of permanent magnet mounting holes comprises two permanent magnet mounting holes, the two permanent magnet mounting holes in each group of permanent magnet mounting holes are symmetrically arranged in the radial direction of the silicon steel sheet, and two permanent magnet mounting holes in at least one group of permanent magnet mounting holes are in communication with the shaft hole through a same first radial flow channel or are in communication with a same lightening hole through a same second radial flow channel.

7. The silicon steel sheet according to any one of claims 1 to 6, wherein the permanent magnet mounting hole comprises a first hole wall and a second hole wall, the first hole wall and the second hole wall are opposite to each other, a distance between the first hole wall and the shaft hole is less than a distance between the second hole wall and the shaft hole in the radial direction of the silicon steel sheet, and the first radial flow channel or the second radial flow channel passes through the first hole wall in the radial direction of the silicon steel sheet.

8. A permanent magnet synchronous motor with a radial flow channel, wherein the permanent magnet synchronous motor comprises a motor shaft, a rotor, and a stator, the rotor is sleeved on the motor shaft, the stator is sleeved on the rotor, the rotor comprises a plurality of permanent magnets and a plurality of silicon steel sheets, and the plurality of silicon steel sheets are adjacently arranged in an axial direction of the motor shaft, wherein
each of the silicon steel sheets comprises a shaft hole, a plurality of lightening holes, and a plurality of permanent magnet mounting holes, the shaft hole, the plurality of lightening holes, and the plurality of permanent magnet mounting holes separately pass through the silicon steel sheet in the axial direction of the motor shaft, the plurality of permanent magnet mounting holes are spaced apart around the shaft hole in a circumferential direction of the silicon steel sheet, and the plurality of lightening holes are spaced apart around the shaft hole in the circumferential direction of the silicon steel sheet; and
the plurality of silicon steel sheets comprise at least one silicon steel sheet with the radial flow channel, the silicon steel sheet with the radial flow channel comprises at least one of a first radial flow channel, a second radial flow channel, or a third radial flow channel, the first radial flow channel is provided to make the shaft hole and at least one of the permanent magnet mounting holes be in communication, the second radial flow channel is provided to make at least one of the permanent magnet mounting holes and at least one of the lightening holes be in communication, and the third radial flow channel is provided to make the shaft hole and at least one of the lightening holes be in communication.

9. The permanent magnet synchronous motor according to claim 8, wherein the rotor comprises a plurality of rotor cores, the plurality of rotor cores are adjacently arranged in the axial direction of the motor shaft, the plurality of silicon steel sheets are classified into a plurality of groups, each group of silicon steel sheets forms one of the rotor cores in the axial direction of the motor shaft, and each group of silicon steel sheets comprises at least one silicon steel sheet with the radial flow channel.

10. The permanent magnet synchronous motor according to claim 8 or 9, wherein the rotor comprises an end plate, the plurality of silicon steel sheets are arranged on a side of the end plate in the axial direction of the motor shaft, and an end surface that is of the end plate and that faces the plurality of silicon steel sheets comprises at least one liquid outlet hole, wherein
in the axial direction of the motor shaft, a projection of the at least one liquid outlet hole at least partially overlaps a projection of one of the permanent magnet mounting holes or a projection of one of the lightening holes in the silicon steel sheet adjacent to the end plate.

11. The permanent magnet synchronous motor according to claim 10, wherein the plurality of liquid outlet holes comprise at least one of a first liquid outlet hole or a second liquid outlet hole, wherein
in the axial direction of the motor shaft, a projection of the first liquid outlet hole at least partially overlaps the projection of one of the permanent magnet mounting holes in the silicon steel sheet adjacent to the end plate;
in the axial direction of the motor shaft, a projection of the second liquid outlet hole at least partially overlaps the projection of one of the lightening holes in the silicon steel sheet adjacent to the end plate; and
in a radial direction of the motor shaft, a distance between the second liquid outlet hole and the motor shaft is less than a distance between the first liquid outlet hole and the motor shaft.

12. The permanent magnet synchronous motor according to claim 10, wherein the end plate is sleeved on the motor shaft, the end plate comprises a radial liquid inlet channel, an inlet of the radial liquid inlet channel is provided on an inner circumferential surface that is of the end plate and that faces the motor shaft, and an outlet of the radial liquid inlet channel is provided on the end surface that is of the end plate and that faces the plurality of silicon steel sheets, wherein
in the axial direction of the motor shaft, a projection of the outlet of the radial liquid inlet channel at least partially overlaps the projection of one of the lightening holes or the projection of one of the permanent magnet mounting holes in the silicon steel sheet adjacent to the end plate.

13. The permanent magnet synchronous motor according to any one of claims 8 to 12, wherein the motor shaft comprises an intra-shaft cooling liquid channel and one or more radial through holes, the radial through hole is in communication with the intra-shaft cooling liquid channel, and the radial through hole is provided on an outer circumferential surface of the motor shaft, wherein
in the radial direction of the motor shaft, a projection of at least one of the radial through holes at least partially overlaps a projection of the first radial flow channel or the third radial flow channel in the at least one silicon steel sheet; or
in the radial direction of the motor shaft, a projection of at least one of the radial through holes at least partially overlaps a projection of the inlet of the radial liquid inlet channel.

14. A powertrain, comprising a reducer or gearbox and the permanent magnet synchronous motor according to any one of claims 8 to 13, wherein the motor shaft of the permanent magnet synchronous motor is in a transmission connection with an input shaft of the reducer or an input shaft of the gearbox.

15. An electric vehicle, comprising wheels, a transmission mechanism, and the powertrain according to claim 14, wherein the powertrain drives the wheels by using the transmission mechanism.
